# EUROPÄISCHE PATENTSCHRIFT

(11) **EP 1 593 301 B1**
(45) Veröffentlichungstag und Bekanntmachung des Hinweises auf die Patenterteilung: **19.12.2007**
(21) Anmeldenummer: 05008341.9
(22) Anmeldetag: 16.04.2005
(51) Int. Cl.: A01G 9/02

(54) **Pflanztopf-Anordnung**
Flower pot arrangement
Agencement de pot de fleur

(30) Priorität: 04.05.2004 DE 102004022223
(43) Veröffentlichungstag der Anmeldung: 09.11.2005
(73) Patentinhaber: Geobra Brandstätter GmbH & Co. KG, D-90513 Zirndorf (DE)
(72) Erfinder: Brandstätter, Horst, 90513 Zirndorf (DE)
(74) Vertreter: Rau, Albrecht

(56) Entgegenhaltungen:
- EP-A- 0 249 027
- DE-C1- 4 004 136
- GB-A- 2 384 159

## Beschreibung

Die Erfindung betrifft eine Pflanztopf-Anordnung.

Aus der DE 40 04 136 C1 ist eine Pflanztopf-Anordnung bekannt, die aus einem Übertopf und einem in den Übertopf einsetzbaren Einsetztopf besteht. Im oberen Randbereich des Einsetztopfes sind zwei Vorsprünge angeformt. Der Übertopf hat einen nach außen vorstehenden Randbereich, in dem zwei Aussparungen für die beiden Vorsprünge ausgebildet sind. Die Vorsprünge des Einsetztopfes stehen soweit radial nach außen vor, dass jeweils ein Abschnitt ihrer Unterseite frei liegt. Die Vorsprünge können hier untergriffen werden, um den Einsetztopf aus dem Übertopf herauszuheben. Die Konstruktion erfordert einiges an Geschicklichkeit und unterbricht das einheitliche Bild des Übertopfes.

Die Aufgabe der vorliegenden Erfindung liegt darin, eine Pflanztopf-Anordnung mit einem Übertopf und einem in den Übertopf einfach einsetzbaren und aus diesem einfach wieder heraushebbaren Einsetztopf zu schaffen.

Diese Aufgabe wird erfindungsgemäß durch die im Anspruch 1 angegebenen Merkmale gelöst. Der Kern der Erfindung liegt also darin, dass der Übertopf und der Einsetztopf über eine an dem Einsetztopf angreifende Tragschnur zusammenführbar und voneinander trennbar sind.

Weitere vorteilhafte Ausgestaltungen geben die Unteransprüche an.

Nachfolgend wird die Erfindung anhand eines bevorzugten Ausführungsbeispieles in Verbindung mit der Zeichnung näher beschrieben. Dabei zeigen:
- Fig. 1: eine perspektivische Ansicht einer erfindungsgemäßen Pflanztopf-Anordnung, wobei sich der Einsatztopf außerhalb des Übertopfes befindet;

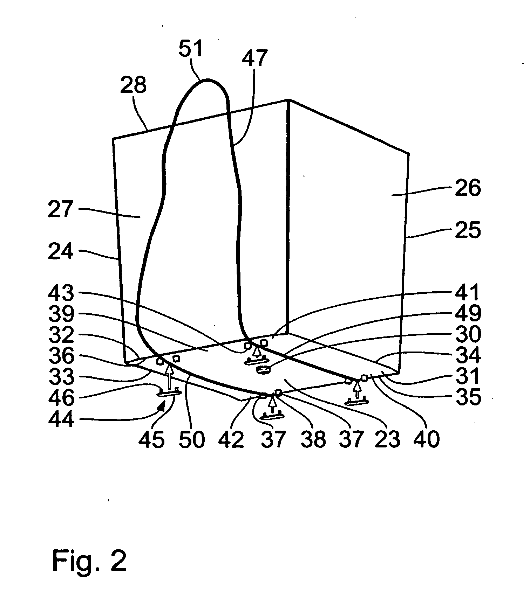

- Fig. 2: eine perspektivische Ansicht des in Fig. 1 dargestellten Einsetztopfes von schräg unten; und
- Fig. 3: eine perspektivische Ansicht der in Fig. 1 dargestellten Pflanztopf-Anordnung, wobei der Einsetztopf in den Übertopf eingesetzt ist.

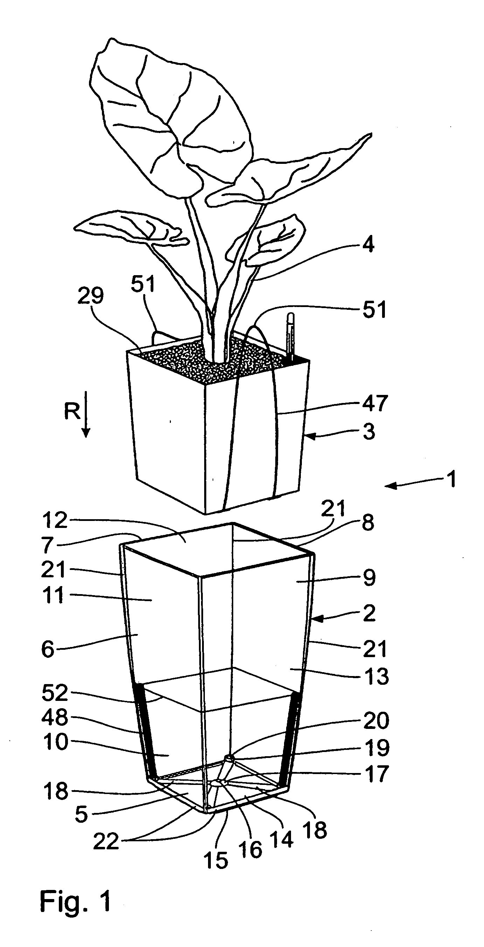

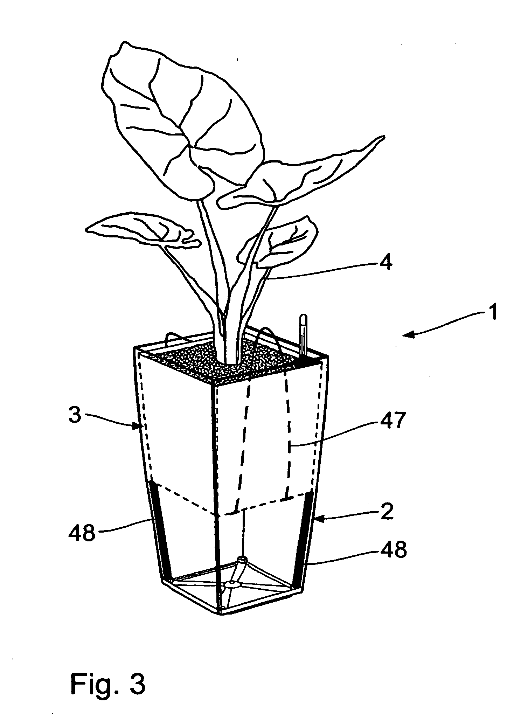

Eine in den Fig. 1 und 3 dargestellte Pflanztopf-Anordnung 1 umfasst einen Übertopf 2 und einen in den Übertopf 2 einsetzbaren Einsetztopf 3. In den Einsetztopf 3 wird eine Grünpflanze 4 eingepflanzt. Sowohl der Übertopf 2 als auch der Einsetztopf 3 bestehen aus hochwertigem Kunststoff.

Der einstückige Übertopf 2 ist dünnwandig ausgebildet und oben offen. Er ist im Querschnitt quadratisch ausgebildet und weist einen quadratischen Boden 5 auf, an welchen sich randseitig vier Seitenwände 6, 7, 8, 9 anschließen. Die Seitenwände 6 bis 9 verlaufen, ausgehend von dem Boden 5, nach oben und dabei leicht nach außen, d. h. der Abstand zweier gegenüberliegender Seitenwände 6, 8 bzw. 7, 9 erweitert sich allmählich. Der Übertopf 2 weist einen unteren, den Boden 5 einschließenden hohlen Pyramidenstumpf-Abschnitt 10 auf, an welchen ein oberer, hohler Pyramidenstumpf-Abschnitt 11 angrenzt. Der untere Pyramidenstumpf-Abschnitt 10 reicht von dem Boden 5 bis zu einer Übergangskante 52. In dem den Boden 5 gegenüberliegenden Randbereich des oberen Pyramidenstumpf-Abschnittes 11 weist der Übertopf 2 eine quadratische Einfuhr-Öffnung 12 auf, an welche sich ein durch die Seitenwände 6 bis 9 und den Boden 5 begrenzter Aufnahme-Raum 13 anschließt.

Der Boden 5 weist eine dem Aufnahme-Raum 13 bzw. der Einführ-Öffnung 12 zugewandte Oberseite 14 auf. Auf der der Oberseite 14 abgewandten Seite des Bodens 5 befindet sich eine Unterseite 15, die als Standfläche fungiert. Die Unterseite 15 kann eben ausgebildet sein oder nach unten vorspringende Fußansätze aufweisen. Der Boden 5 wird von einer Sicker-Öffnung 16 durchdrungen, die für eine Verbindung zwischen dem Aufnahme-Raum 13 und der äußeren Umgebung sorgt. Die Sicker-Öffnung 16 ist im Querschnitt kreisförmig ausgestaltet und kann beispielsweise ein Innengewinde aufweisen. Sie ist in der Mitte des Bodens 5 angeordnet und wird von einem Ring-Ansatz 17 umlaufen, der von der Oberseite 14 des Bodens 5 nach oben vorspringt. Der Boden 5 ist durch vier Versteifungs-Streben 18 verstärkt, die mit der Oberseite 14 des Bodens 5 verbunden sind. Die Versteifungs-Streben 18 verlaufen jeweils von einem Eckbereich des Bodens 5 zu dem Ring-Ansatz 17. Sie verlaufen somit diagonal. Auf jeder Versteifungs-Strebe 18 befindet sich ein Ring-Steg 19, der in deren äußeren End-Bereich vorgesehen ist und sich von einer Versteifungs-Strebe 18 nach oben erstreckt. Der Ring-Steg 19 begrenzt seitlich eine im Querschnitt kreisförmige Einsteck-Öffnung 20, die nach oben, d. h. zu dem Aufnahme-Raum 13 hin offen ist. Der Ring-Steg 19 grenzt an durch die Seitenwände 6 bis 9 gebildete Kanten 21 und an zu den Kanten 21 benachbarten Kanten-Bereichen 22 an. Die Einsteck-Öffnungen 20 sind unten verschlossen.

Der einstückige Einsetztopf 3 weist einen quadratischen Querschnitt auf und ist dünnwandig ausgebildet. Die Gestalt des Einsetztopfes 3 entspricht einem Pyramidenstumpf. Der Einsetztopf 3 weist einen unteren quadratischen Boden 23 auf, an welchen sich vier nach oben und dabei leicht nach außen verlaufende Seitenwände 24, 25, 26, 27 anschließen. Der Abstand zweier gegenüberliegender Seitenwände 24, 26 bzw. 25, 27 erweitert sich somit allmählich ausgehend von dem Boden 23. Sowohl die Innenkontur als auch die Außenkontur des Einsetztopfes 3 entspricht einem Pyramidenstumpf. Die Außen-Kontur des Einsetztopfes 3 entspricht im Wesentlichen der Innen-Kontur des oberen Pyramidenstumpf-Abschnitt 11 des Übertopfes 2. Die Neigung der Außenseiten der Seitenwände 24 bis 27 entspricht im Wesentlichen der Neigung der Innenseiten der Seitenwände 6 bis 9 im Bereich des oberen Pyramidenstumpf-Abschnittes 11.

Die Seitenwände 24 bis 27 und der Boden 23 begrenzen einen Pflanz-Raum 28, der über eine obere Öffnung 29 mit der Umgebung in Verbindung steht. Der Einsetztopf 3 bzw. der Pflanz-Raum 28 ist nach oben offen und dient - wie bereits erwähnt - zur Aufnahme einer Pflanze und eines Substrats, wie zum Beispiel Erde.

In der Mitte des Bodens 23 befindet sich ein in den Einsetztopf 3 vorspringender Überlauf mit einer mittigen Sicker-Öffnung 30, die im Querschnitt kreisförmig ausgebildet ist und ein Innengewinde aufweisen kann. Der Boden 23 weist eine nach außen gewandte Unterseite 31 und eine der Unterseite 31 abgewandte Oberseite 32 auf. Die Oberseite 32 ist somit dem Pflanz-Raum 28 zugewandt. Zwischen der Seitenwand 24 und dem Boden 23 liegt eine Kante 33 vor. Der Kante 33 liegt eine Kante 34 gegenüber, die durch die Seitenwand 26 und den Boden 23 gebildet wird. Durch die Seitenwand 25 und den Boden 23 wird eine Kante 35 gebildet, während durch die Seitenwand 27 und den Boden 23 eine der Kante 35 gegenüberliegende Kante 36 gebildet wird. Der Einsetztopf 3 kann auch ohne Sicker-Öffnung 30 ausgebildet sein.

Von der Unterseite 31 des Bodens 23 erstrecken sich acht Führungsansätze 37 nach unten, die paarweise, aber beabstandet zueinander angeordnet sind. Zwischen jeweils zwei benachbart angeordneten Führungsansätzen 37 befindet sich ein Führungs-Zwischenraum 38. Vier Führungsansätze 37 befinden sich in einem an die Kante 36 angrenzenden Kantenbereich 39 des Bodens 23. Diese vier Führungsansätze 37 sind auf einer gedachten Linie angeordnet, die parallel zu der Kante 36 verläuft. Die anderen vier Führungsansätze 37 befinden sich in einem zu der Kante 35 benachbarten Kantenbereich 40 des Bodens 23. Die sich in dem Kantenbereich 40 befindlichen Führungsansätze 37 sind ebenfalls auf einer gedachten Linie angeordnet, die parallel zu der Kante 35 verläuft. Die Kantenbereiche 39, 40 verlaufen parallel, aber beabstandet zueinander. Die Führungsansätze 37 sind außerdem in Randbereichen 41, 42 des Bodens 23 angeordnet. Der Randbereich 41 verläuft benachbart zu der Kante 34, während der Randbereich 42 an die Kante 33 angrenzt. Die einander parallelen Randbereiche 41, 42 verlaufen senkrecht zu den Kantenbereichen 39, 40. Das eine in dem Kantenbereich 39 vorgesehene Paar von Führungsansätzen 37 befindet sich in dem Randbereich 42, während das andere sich in dem Kantenbereich 39 befindliche Paar von Führungsansätzen 37 in dem Randbereich 41 angeordnet ist. Entsprechend ist ein Paar von Führungsansätzen 37, die in dem Kantenbereich 40 angeordnet sind, in dem Randbereich 42 und dem Randbereich 41 vorgesehen. Die Führungsansätze 37 sind symmetrisch einer parallel zu den Kanten 33 und 34 verlaufenden Mittellinie und zu einer zu den Kanten 35 und 36 verlaufenden Mittellinie angeordnet. In jedem Führungsansatz 37 befindet sich eine nach unten offene Öffnung 43, die im Querschnitt kreisförmig ausgebildet ist.

In die Öffnungen 43 von jeweils zwei paarweise angeordneten Führungsansätzen 37 ist jeweils ein Verschlusselement 44 einsteckbar, das eine Basis 45 und zwei sich von der Basis erstreckende Einsteckstifte 46 aufweist. Die Einsteckstifte 46 sind jeweils im Querschnitt kreisförmig ausgebildet. Der Abstand der Einsteckstifte 46 zueinander auf einem Verschlusselement 44 entspricht dem Abstand zweier benachbarter Führungsansätze 37. Der Durchmesser eines Einsteckstiftes 46 ist an den Durchmesser einer Öffnung 43 eines Führungsansatzes 37 angepasst. Die Verschlusselemente 44 dienen zum Überbrücken zweier benachbarter Führungsansätze 37 bzw. zum Begrenzen des Führungs-Zwischenraumes 38 nach unten. Die Pflanztopf-Anordnung 1 umfasst außerdem eine schlaufenförmige reißfeste Tragschnur 47, deren Enden miteinander verknotet sind. Die Tragschnur 47 kann aber auch endlos ausgestaltet sein.

Außerdem umfasst die Pflanztopf-Anordnung 1 zwei im Querschnitt kreisförmig ausgebildete Abstandselemente 48 in Form von Abstandsstäben. Der Durchmesser der Abstandsstäbe 48 ist an den Durchmesser der Einsteck-Öffnungen 20 angepasst. Die Länge der Abstandsstäbe 48 entspricht im Wesentlichen der Höhe des unteren Pyramidenstumpf-Abschnittes 10.

Im Folgenden wird der Zusammenbau der Pflanztopf-Anordnung 1 näher beschrieben. Die zwei Abstandsstäbe 48 sind in zwei schräg gegenüberliegende Einsteck-Öffnungen 20 des Übertopfes 2 einzuführen. Die Abstandstäbe 48 liegen dabei an den Seitenwänden 6 bis 9 in deren Kanten-Bereichen 22 an. Die Abstandstäbe 48 sind durch die Einsteck-Öffnungen 20 fixiert. Die Tragschnur 47 ist derart durch die Führungs-Zwischenräume 38 der Führungsansätze 37 zu führen, dass ein Abschnitt 49 der Tragschnur 47 in dem Randbereich 41 und ein anderer Abschnitt 50 der Tragschnur 47 in dem Randbereich 42 verläuft. Die Abschnitte 49, 50 der Tragschnur 47 verlaufen somit parallel und beabstandet zueinander an der Unterseite 31 des Bodens 23. Anschließend sind die Führungs-Zwischenräume 38 durch die Verschlusselemente 44 nach unten zu verschließen. Dabei sind die Einsteckstifte 46 in die entsprechenden Öffnungen 43 der Führungsansätze 37 einzuführen. Die Einsteckstifte 46 können beispielsweise mit den Führungsansätzen 37 in Rast-Verbindung stehen oder reibschlüssig festgelegt sein.

Der Einsetztopf 3 ist mittels der Tragschnur 47 in den an die Form des Einsetztopfes 3 angepassten Übertopf 2 einzusetzen. Der Einsetztopf 3 ist dazu in einer Einsetz-Richtung R über die Einführ-Öffnung 12 des Übertopfes 3 in dessen Aufnahme-Raum 13 einzusetzen. Die Einsetz-Richtung R verläuft senkrecht zu dem Boden 5. Die Tragschnur 47 ist dabei an Schlaufenabschnitten 51 zu greifen. Die schlaufenförmige Tragschnur 47 weist eine Länge auf, die länger als die Summe der Höhe von zwei Seitenwänden 25, 27 und der Seitenlänge des Bodens 23 ist. Die Schlaufenabschnitte 51 verlaufen beim Tragen des Einsetztopfes 3 über den freien oberen Rand desselben hinaus. Sie verläuft außenseitig entlang der Seitenwände 25 und 27 sowie entlang der Unterseite 31 des Bodens 23. Die Schlaufenabschnitte 51 wirken als Henkel- bzw. Griffabschnitte.

Im eingesetzten Zustand des Einsetztopfes 3 in den Übertopf 2 liegt die Unterseite 31 des Bodens 23 auf den oberen freien Enden der Abstandsstäbe 48 auf. Hierdurch wird der Einsetztopf 3 gegenüber dem Boden 5 des Übertopfes 2 abgestützt. Der Boden 23 befindet sich leicht oberhalb der Übergangskante 52 zwischen den Pyramidenstumpf-Abschnitten 10 und 11. Die Abstandsstäbe 48 verhindern, dass sich der innere Einsetztopf 3 in dem äußeren Übertopf 2 festklemmt. Es können auch drei oder vier Abstandsstäbe 48 verwendet werden. Im eingesetzten Zustand sind die Seitenwände 24 bis 27 des Einsetztopfes 3 im Wesentlichen parallel zu den Seitenwänden 6 bis 9 des Übertopfes 2 im oberen Pyramidenstumpf-Abschnitt 11. Der obere Rand des Einsetztopfes 3 verläuft leicht unterhalb des oberen Randes des Übertopfes 2.

Die Tragschnur 47 befindet sich zwischen den Seitenwänden 25, 27 des Einsetztopfes 3 und den den Seitenwänden 25, 27 gegenüberliegenden Seitenwänden 7, 9 des Übertopfes 2. Die Tragschnur 47 kann durch eine entsprechende Wahl des Tragschnur-Durchmessers bzw. durch eine entsprechende Ausgestaltung des Übertopfes 2 und des Einsetztopfes 3 zwischen dem Übertopf 2 und dem Einsetztopf 3 festgeklemmt sein. Hierdurch wird verhindert, dass die Schlaufenabschnitte 51 in den Zwischenraum zwischen Übertopf 2 und Einsetztopf 3 rutschen können und somit nicht mehr von außen greifbar sind. Die Schlaufenabschnitte 51 sind aus dem Übersetztopf 3 geführt.

Aus ästhetischen Gründen sind die Schlaufenabschnitte 51 in das in dem Einsetztopf 3 befindliche Substrat einzugraben. Sie sind dann nicht mehr ersichtlich. Durch das Eingraben der Schlaufenabschnitte 51 kann aber auch die Tragschnur 47 in ihrer Position festgelegt werden, um ein Verrutschen zu verhindern.

Der Einsetztopf 3 ist über die Schlaufenabschnitte 51 wieder leicht aus dem Übertopf 2 entgegen der Einsetz-Richtung R heraushebbar. Da die Abschnitte 49, 50 der Tragschnur 47 in den Randbereichen 41, 42 des Bodens 5 verlaufen, kann der Einsetztopf 3 stabil getragen werden. Ein Kippen des Einsetztopfes 3 wird somit beim Tragen durch den Verlauf der Tragschnur 47 an der Unterseite 31 verhindert. Außerdem wird durch den entsprechenden Verlauf der Tragschnur 47 ein problemloses Einsetzen des Einsetztopfes 3 in den Übertopf 2 und ein entsprechendes Herausheben ermöglicht. Ein Verkanten bzw. Verklemmen wird sowohl beim Einführen als auch beim Herausheben verhindert.

Wenn die Pflanztopf-Anordnung 1 für den Innenbereich vorgesehen ist, ist die Sicker-Öffnung 16 flüssigkeitsdicht durch einen Stöpsel oder eine Schraube von der Außenseite bzw. der Unterseite 15 aus zu verschließen. Für die Sicker-Öffnung 30 gilt das Gleiche. Die Pflanztopf-Anordnung 1 ist somit bei einer Verwendung im Innenbereich flüssigkeitsdicht abgeschlossen, so dass Wasser nicht in die Umgebung gelangen kann. Wenn die Pflanztopf-Anordnung 1 außen aufgestellt wird, sollten sowohl die Sicker-Öffnung 16 als auch die Sicker-Öffnung 30 unverschlossen sein. Überschüssiges Wasser kann somit aus dem Einsetztopf 3 und dem Übertopf 2 abfließen.

Der Einsetztopf 3 könnte auch ohne Übertopf 2 alleine aufgestellt werden. Die Führungsansätze 37 wirken dabei als abstützende Füße. Wenn der Einsetztopf 3 in einem Innenbereich aufgestellt werden soll, ist die Sicker-Öffnung 30 über einen Stöpsel oder eine Schraube von der Unterseite 31 aus flüssigkeitsdicht zu verschließen. Wird der Einsetztopf 3 allein außen aufgestellt, sollte die Sicker-Öffnung 30 unverschlossen bleiben.

Der Übertopf 2 kann beispielsweise mit einem Gewicht beschwert werden, das in dem unteren Pyramidenstumpf-Abschnitt 10 aufgenommen werden kann. Hierdurch kann die Standsicherheit der Pflanztopf-Anordnung 1 vor allem gegen Wind wesentlich erhöht werden.

Über die Tragschnur 47 kann der bepflanzte Einsetztopf 3 bequem und einfach aus dem Übertopf 2 herausgenommen werden und durch einen anderen bepflanzten Einsetztopf 3 ausgetauscht werden. Dies ist beispielsweise für Hotelanlagen besonders interessant, da ein erschwerliches Bewegen des Übertopfes 2 entfällt. Auch für Gärtnereien ist dieser schnelle Austausch von Einsetztöpfen 3 besonders vorteilhaft. Der Übertopf 2 kann außenseitig dekorative Verzierungen aufweisen.

In der Beschreibung wird des Öfteren der Ausdruck "unten" bzw. "nach unten" verwendet. Dieser Ausdruck bezieht sich auf die in Figuren 1 und 3 dargestellte Anordnung der einzelnen Komponenten und somit auf die Aufstellung der Pflanz-Anordnung 1 im Sinne der Erfindung gemäß Figur 3. Der Ausdruck "oben" bzw. "nach oben" wird entsprechend verwendet.

## Patentansprüche

1. Pflanztopf-Anordnung
mit einem Übertopf (2) und
mit einem Einsetztopf (3) zur Aufnahme einer Pflanze (4) und zum Einsetzen in den Übertopf (2),
wobei der Einsetztopf (3) aus dem Übertopf (2) heraushebbar ist, **gekennzeichnet durch**
mindestens eine mit dem Einsetztopf (3) in Verbindung stehenden Tragschnur (47) zum Herausheben des Einsetztopfes (3) aus dem Übertopf (2) und zum Tragen des Einsetztopfes (3).

2. Pflanztopf-Anordnung nach Anspruch 1, **dadurch gekennzeichnet, dass** der Übertopf (2) einen Übertopf-Boden (5) aufweist und der Einsetztopf (3) einen Einsetztopf-Boden (23) aufweist.

3. Pflanztopf-Anordnung nach Anspruch 2, **gekennzeichnet durch** mindestens ein Abstandselement (48) zur Abstützung des Einsetztopf-Bodens (23) gegenüber dem Übertopf-Boden (5).

4. Pflanztopf-Anordnung nach einem der vorherigen Ansprüche, **dadurch gekennzeichnet, dass** die mindestens eine Tragschnur (47) teilweise an der Unterseite (31) des Einsetztopf-Bodens (23) verläuft.

5. Pflanztopf-Anordnung nach Anspruch 4, **dadurch gekennzeichnet, dass** die mindestens eine Tragschnur (47) an der Unterseite (31) des Einsetztopf-Bodens (23) geführt verläuft.

6. Pflanztopf-Anordnung nach einem der vorherigen Ansprüche, **dadurch gekennzeichnet, dass** von der Unterseite (31) des Einsetztopf-Bodens (23) mindestens ein Paar voneinander beabstandeter Führungsansätze (37) zur Führung der Tragschnur (47) vorspringt.

7. Pflanztopf-Anordnung nach Anspruch 6, **dadurch gekennzeichnet, dass** in jeweils zwei paarweise angeordnete Führungsansätze (37) ein diese miteinander verbindendes Verschlusselement (44) zur Führung der Tragschnur (47) einsteckbar ist.

8. Pflanztopf-Anordnung nach einem der vorherigen Ansprüche, **dadurch gekennzeichnet, dass** eine schlaufenförmige Tragschnur (47) vorgesehen ist.

9. Pflanztopf-Anordnung nach Anspruch 8, **dadurch gekennzeichnet, dass** die Tragschnur (47) zwei Abschnitte (49, 50) aufweist, die an der Unterseite (31) des Einsetztopf-Bodens (23) in zwei einander gegenüberliegenden Randbereichen (41, 42) des Einsetztopf-Bodens (23) verlaufen.

10. Pflanztopf-Anordnung nach Anspruch 8, **dadurch gekennzeichnet, dass** die Tragschnur (47) zwei aus dem Übersetztopf (2) herausgeführte Schlaufenabschnitte (51) aufweist.

## Claims

1. Plant pot arrangement comprising
- an outer pot (2), and
- an insert pot (3) which is intended to hold a plant (4) and is insertable into the outer pot (2), said insert pot (3) being configured in a way that it can be lifted out of the outer pot (2),
**characterized by** at least one carrying strap (47) which is connected to the insert pot (3) for lifting the insert pot (3) out of the outer pot (2) and for carrying the insert pot (3).

2. Plant pot arrangement of claim 1 **characterized in that** the outer pot (2) has an outer pot bottom (5), and that the insert pot (3) has an insert pot bottom (23).

3. Plant pot arrangement of claim 2 **characterized by** at least one spacing element (48) which is provided so as to keep a distance between the insert pot bottom (23) and the outer pot bottom (5).

4. Plant pot arrangement of any one of the previous claims **characterized in that** part of the at least one carrying strap (47) extends along the underside (31) of the insert pot bottom (23).

5. Plant pot arrangement of claim 4 **characterized in that** the at least one carrying strap (47) is guided along the underside (31) of the insert pot bottom (23).

6. Plant pot arrangement of any one of the previous claims **characterized in that** there is at least one pair of guide projections (37) which are disposed at a certain distance to each other, said guide projections (37) projecting from the underside (31) of the insert pot bottom (23) for guiding the carrying strap (47).

7. Plant pot arrangement of claim 6 **characterized in that** guide projections (37) are arranged in pairs of two, each pair being connected by an insertable plug element (44) for guiding the carrying strap (47).

8. Plant pot arrangement of any one of the previous claims **characterized in that** said plant pot arrangement is provided with a loop-shaped carrying strap (47).

9. Plant pot arrangement of claim 8 **characterized in that** the carrying strap (47) has two sections (49, 50) extending along two opposite edge areas (41, 42) on the underside (31) of the insert pot bottom (23).

10. Plant pot arrangement of claim 8 **characterized in that** the carrying strap (47) has two loop sections (51) which are led out of the outer pot (2).

## Revendications

1. Agencement de pot de fleurs
avec un cache pot (2) et
avec un pot à fleurs (3) devant recevoir une plante (4) et à placer dans le cache pot (2),
où le pot à fleurs (3) peut être extrait du cache pot (2), **caractérisé par** au moins un fil porteur (47) rattaché au pot à fleurs (3), permettant de soulever le pot à fleurs (3) hors du cache pot (2) et de porter le pot à fleurs (3).

2. Agencement de pot de fleurs selon la revendication 1, **caractérisé en ce que** le cache pot (2) présente un fond de cache pot (5) et le pot à fleurs (3) présente un fond de pot à fleurs (23).

3. Agencement de pot de fleurs selon la revendication 2, **caractérisé par** au moins une cale d'écartement (48) sur laquelle vient se poser le fond de pot à fleurs (3) et par laquelle ce dernier est maintenu à distance du fond de cache pot (5).

4. Agencement de pot de fleurs selon l'une des revendications précédentes, **caractérisé en ce que** au moins un fil porteur (47) passe partiellement par le dessous (31) du fond de pot à fleurs (23).

5. Agencement de pot de fleurs selon la revendication 4, **caractérisé en ce que** au moins un fil porteur (47) passe de façon guidée par le dessous (31) du fond de pot à fleurs (23).

6. Agencement de pot de fleurs selon l'une des revendications précédentes, **caractérisé en ce que** au moins deux têtes de guidage (37), distantes l'une de l'autre, et permettant de guider le fil porteur (47), dépassent du dessous (31) du fond de pot à fleurs (23).

7. Agencement de pot de fleurs selon la revendication 6, **caractérisé en ce que** dans de ces têtes de guidage, chacune (37) alignées par paire, on peut fixer un élément de verrouillage (44) permettant de guider le fil porteur (47).

8. Agencement de pot de fleurs selon l'une des revendications précédentes, **caractérisé en ce que** un fil porteur en forme de anse (47) est prévu.

9. Agencement de pot de fleurs selon la revendication 8, **caractérisé en ce que** le fil porteur (47) présente deux sections (49, 50) qui passent par le dessous (31) du fond de pot à fleurs (23) dans deux bordures (41, 42) parallèles du fond de pot à fleurs (23).

10. Agencement de pot de fleurs selon la revendication 8, **caractérisé en ce que** le fil porteur (47) présente deux anses (51) dépassant du cache pot (2).
